# EUROPÄISCHE PATENTSCHRIFT

(11) **EP 0 563 540 B1**
(45) Veröffentlichungstag und Bekanntmachung des Hinweises auf die Patenterteilung: **19.07.1995**
(21) Anmeldenummer: 93101770.1
(22) Anmeldetag: 05.02.1993
(51) Int. Cl.: B64C 1/14

(54) **Torschwellenschutz**
Protective plate for a door threshold
Plaque de protection de seuil de porte

(30) Priorität: 28.03.1992 DE 4210303
(43) Veröffentlichungstag der Anmeldung: 06.10.1993
(73) Patentinhaber: Daimler-Benz Aerospace Airbus Gesellschaft mit beschränkter Haftung, 21129 Hamburg (DE)
(72) Erfinder: Eilenstein-Wiegmann, Wilfried, W-2805 Stuhr (DE); Vogg, Günter, W-2800 Bremen (DE)
(74) Vertreter: Hansmann, Dierk, Dipl.-Ing.

(56) Entgegenhaltungen:
- EP-A- 0 259 886
- US-A- 3 169 282

## Beschreibung

Die Erfindung betrifft eine Vorrichtung zur Abdeckung eines unteren Bereiches einer von einem Tor verschließbaren Laderaumöffnung im Bereich einer Außenwandung eines Flugzeuges.

Derartige Vorrichtungen werden verwendet, um eine Beladung eines Flugzeuginnenraumes mit Fracht zu vereinfachen. Die Vorrichtung überbrückt dabei einen Bereich, der in einem verschlossenen Zustand vom Tor der Laderaumöffnung eingenommen wird. Nach einem Öffnen des Tores erstreckt sich zwischen einer Seitenkante einer Bodenstruktur des Flugzeuges und der Außenkontur des Flugzeuges ein Zwischenraum, der bei einer Beladung hinderlich ist. Darüber hinaus besteht die Gefahr, daß eine Einfassung der Laderaumöffnung bzw. eine Begrenzungskante der Bodenstruktur, in diesem Fall ein Element zum Verschieben von Frachtbehältern, bei einem Einschieben oder Einsetzen der Last ohne Verwendung einer derartigen Abdeckungsvorrichtung beschädigt wird.

Bekannte Vorrichtungen können zwar die Anforderungen an eine Überbrückung des entstehenden Zwischenraumes sowie an einen Schutz der Begrenzungsbereiche in ausreichender Weise erfüllen, in einem unbenutzten Zustand nehmen die Vorrichtungen jedoch ein vergleichsweise großes Volumen ein, das einer optimalen Ausnutzung des Frachtraumes entgegensteht. Darüber hinaus können die bekannten Vorrichtungen nicht alle Anforderungen an eine einfache Handhabung erfüllen.

Aufgabe der vorliegenden Erfindung ist es daher, eine Vorrichtung der einleitend genannten Art derart zu konstruieren, daß eine raumsparende Anordnung sowie eine einfache Handhabung ermöglicht wird.

Die Aufgabe wird erfindungsgemäß dadurch gelöst, daß eine Abdeckplatte mit mindestens einem die Abdeckplatte mit einer Bodenstruktur des Flugzeuges verbindenden Basisschwenklager versehen ist, eine Stütze im Bereich eines dem Basisschwenklager abgewandten Endes der Abdeckplatte über ein Stützenschwenklager an die Abdeckplatte angelenkt ist und eine Traverse über ein Positionierschwenklager mit der Stütze und über ein Traversenschwenklager mit der Bodenstruktur verbunden ist sowie das Traversenschwenklager mit einem Abstand zum Basisschwenklager angeordnet ist.

Durch die Kombination der Abdeckplatte, der Stütze und der Traverse sowie durch die Anordnung der Schwenklager ist es möglich, die Vorrichtung in einem unbenutzten Zustand mit einem geringen Winkel zur Lotrechten anzuordnen und eine Überführung in einen benutzungsfähigen Zustand durch Aufbringen einer Zugkraft in Richtung auf die Laderaumöffnung durchzuführen. Durch die Verkopplung der Stütze mit der Abdeckplatte durch die Traverse wird die Stütze vor einem Aufsetzen auf ein dafür vorgesehenes Auflager exakt positioniert. Zusätzliche Ausrichtvorgänge sind nicht erforderlich. Die Ausrichtung aller verwendeten Komponenten erfolgt vielmehr selbsttätig durch die vorgenommenen Verbindungen. Nach einer Benutzung wird die Vorrichtung durch ein einfaches Anheben wieder in die Ausgangslage zurückgeschwenkt. Die Stütze und die Traverse klappen dabei ein, so daß in einer unbenutzten Stellung die Stütze und die Traverse im wesentlichen parallel zueinander verlaufen und gemeinsam mit der Abdeckplatte Seitenschenkel eines Dreiecks aufspannen, dessen Grundfläche durch die Verbindungslinie des Basisschwenklagers und des Traversenschwenklagers gebildet wird. Durch die nahezu senkrechte Anordnung der Abdeckplatte und der Stütze im unbenutzten Zustand weist der von der Stütze und der Abdeckplatte aufgespannte Winkel lediglich einen geringen Wert auf. Durch die kompakte Anordnung der Vorrichtung in einem unbenutzten Zustand wird es ermöglicht, eine stationäre Anordnung im Bereich der Bodenstruktur vorzusehen und eine lediglich temporäre Anordnung im Bereich der Laderaumöffnung während der Durchführung von Verladevorgängen zu vermeiden, die mit einem erheblichen Montage- und Demontageaufwand verbunden wäre.

Eine manuell einfach zu bedienende Hebelmechanik wird vorzugsweise dadurch bereitgestellt, daß das Traversenschwenklager zwischen dem Basisschwenklager und einer Flugzeugaußenbegrenzung angeordnet ist. Durch diese Anordnung des Traversenschwenklagers wird die raumsparende Verstauung der Vorrichtung in einem unbenutzten Zustand unterstützt.

Zur Vermeidung von nachteiligen Hebelkräften wird vorgeschlagen, daß die Stütze vorzugsweise im Bereich ihres der Abdeckplatte abgewandten Endes mit einem einem Auflager zuwendbaren Anschlußelement versehen ist.

Eine zur Kraftübertragung günstige Anlenkung der Traverse an die Stütze unter Berücksichtigung vorgegebener Flugzeuggeometrien wird vorzugsweise dadurch ermöglicht, daß die Traverse entlang ihrer Längserstreckung mit einer Richtungsänderung versehen ist.

Ein leichtgängiges Aufschieben einer Last auf die Abdeckplatte wird vorzugsweise dadurch unterstützt, daß im Bereich einer dem Basisschwenklager abgewandten Vorderkante der Abdeckplatte Leitrollen zur Führung einer Last vorgesehen sind. Zusätzlich können auch Transportelemente wie Kugelmatten oder Schwenkrollen vorgesehen werden.

Zur Ermöglichung einer einfachen fertigungstechnischen Realisierung der Abdeckplatte wird vorzugsweise vorgeschlagen, daß das Basisschwenklager aus Lagerstegen ausgebildet ist, die auf einer mit der Bodenstruktur verbundenen Lagerwelle geführt sind.

Eine einfache manuelle Positionierbarkeit sowie eine Reduktion der Fertigungskosten durch die Begrenzung der Bemaßungen wird bevorzugt dadurch erreicht, daß in Richtung einer Längsachse des Flugzeuges mindestens zwei Abdeckplatten hintereinander angeordnet sind.

Eine standardisierte Fertigung unter Berücksichtigung unterschiedlicher Einsatzanforderungen wird vorzugsweise dadurch ermöglicht, daß das Anschlußelement versetzbar im Bereich des dem Auflager zuwendbaren Endes der Stütze angeordnet ist.

Der Aufwand bei der Montage kann dadurch verringert werden, daß die Lagerwelle von einem Adapter gehaltert ist, der über Halterungselemente in eine Sitzschiene im Bereich der Bodenstruktur eingreift.

In der Zeichnung sind Ausführungsbeispiele der Erfindung schematisch dargestellt. Es zeigen:
- Fig. 1: eine Draufsicht auf eine mit Rollen zur Lasteinleitung versehene Abdeckplatte **und**
- Fig. 2: eine Seitenansicht einer Vorrichtung, die sowohl in einer Ruhe- als auch in einer Arbeitspositionierung dargestellt ist.

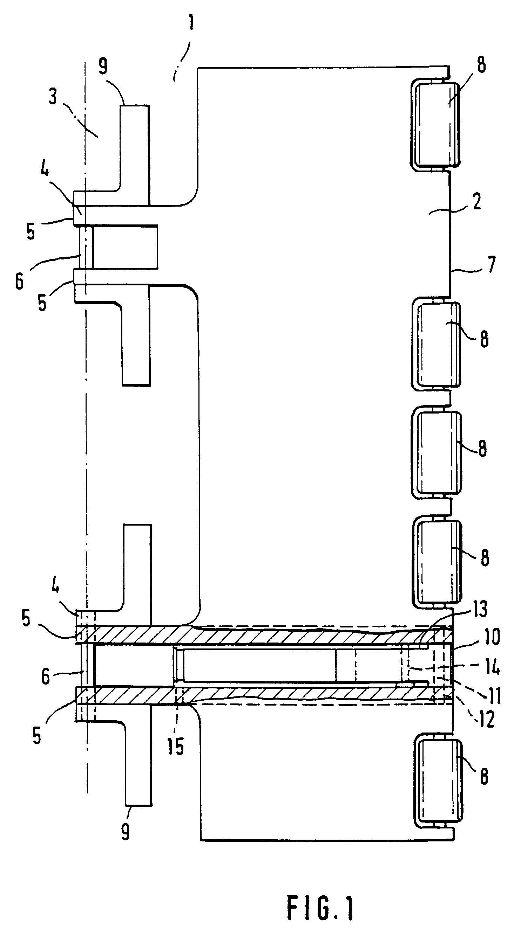

Die Vorrichtung zur Abdeckung eines unteren Bereiches einer Laderaumöffnung (1) besteht im wesentlichen aus einer Abdeckplatte (2), die mit einer Bodenstruktur (3) eines mit der Laderaumöffnung (1) versehenen Flugzeuges über ein Basisschwenklager (4) verbunden ist. Bei der Ausführungsform gemäß Figur 1 sind zwei Basisschwenklager (4) vorgesehen. In Abhängigkeit von einer Längserstreckung der Ladeplatte (2) können aber auch drei oder mehr als drei Basisschwenklager (4) verwendet werden.

Eine einfache Fertigung der als Torschwellenschutz verwendeten Abdeckplatte (2) kann dadurch ermöglicht werden, daß die Basisschwenklager (4) im wesentlichen aus mit der Abdeckplatte (2) verbundenen Lagerstegen (5) ausgebildet sind, die Ausnehmungen aufweisen, durch die Lagerwellen (6) hindurchragen, die mit der Bodenstruktur (3) verbunden sind. Zur Erleichterung einer Positionierung einer Last im Bereich der Abdeckplatte (2) sind im Bereich einer den Basisschwenklagern (4) abgewandten Vorderkante (7) der Abdeckplatte (2) Leitrollen (8) angeordnet. Eine Verschiebebewegung der Last entlang der Abdeckplatte (2) kann darüber hinaus durch rotationsfähig gelagerte Kugeln im Bereich einer Oberfläche der Abdeckplatte (2) unterstützt werden. Zur Erleichterung einer Montage der Lagerwellen (6) sind diese nicht unmittelbar mit der Bodenstruktur (3) verbunden, sondern es sind die Lagerwellen (6) halternde Adapter (9) vorgesehen. Zur Abstützung der Abdeckplatte (2) in einem benutzten Zustand sind Stützen (10) vorgesehen, die jeweils über ein Stützenschwenklager (11) mit der Abdeckplatte (2) verbunden sind. Das Stützenschwenklager (11) ist im Bereich eines dem Basisschwenklager (4) abgewandten Endes der Abdeckplatte (2) vorgesehen. Das Stützenschwenklager (11) weist somit einen geringen Abstand zur Vorderkante (7) auf. Das Stützenschwenklager (11) ist als eine Rille (12) ausgebildet, die von der Abdeckplatte (2) gehaltert ist und die Stütze (10) durchdringt. Die Stütze (10) ist darüber hinaus über eine Traverse (13) mit dem Adapter (9) verbunden. Die Traverse (13) ist über ein Positionierschwenklager (14) mit der Stütze (10) und über ein Traversenschwenklager (15) mit der Bodenstruktur (3) verbunden. Die Schwenklager (14,15) können ebenfalls jeweils aus Wellen ausgebildet sein, für die entsprechende Ausnehmungen vorgesehen sind.

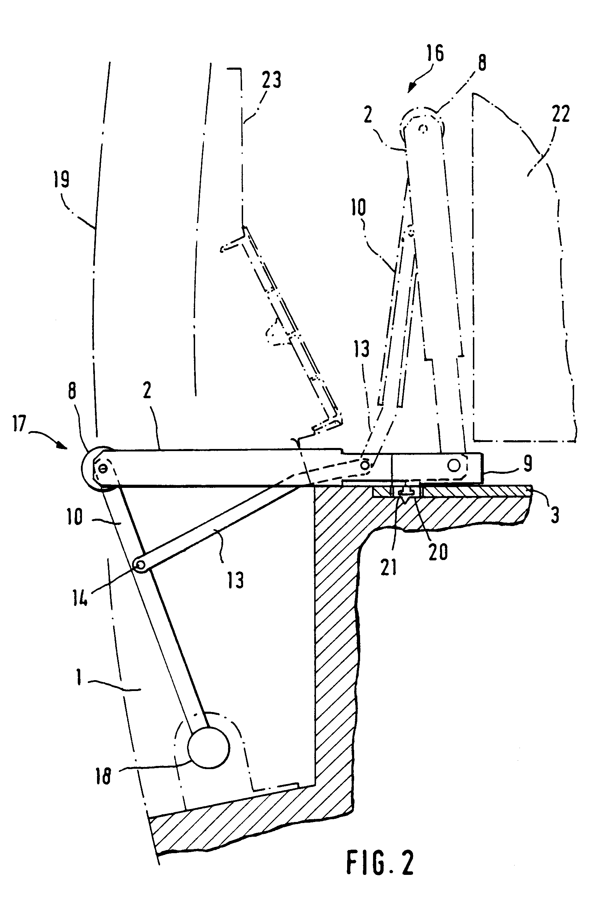

In Figur 2 ist sowohl eine Ruhepositionierung (16) als auch eine Arbeitspositionierung (17) der Abdeckplatte (2) dargestellt. In der Arbeitspositionierung (17) stützt sich die Abdeckplatte (2) über die Stützen (10) auf einem Auflager (18) ab. Aufgrund eines in Richtung einer Flugzeuglängsachse geschwungenen Verlaufes einer Flugzeugaußenbegrenzung (19) ist es zweckmäßig, die Stütze (10) im Bereich ihres der Abdeckplatte (2) abgewandten Endes mit einem versetzbaren Anschlußelement zu versehen. Hierdurch wird es ermöglicht, standardisierte Bauelemente zu verwenden und jeweils in einfacher Weise eine Adaption an die lokalen Verhältnisse vornehmen zu können. Die Versetzbarkeit kann beispielsweise durch eine Mehrzahl von Bohrungen realisiert werden, in die das Anschlußelement mit Bolzen eingreift.

Eine einfache Befestigung der Adapter (9) im Bereich der Bodenstruktur (3) kann derart erfolgen, daß im Bereich der Bodenstruktur (3) vorhandene Sitzschienen (20) verwendet werden, in die der Adapter (9) mit Halterungselementen (21) eingreift. Aus der Anordnung der Abdeckplatte (2) in der Ruhepositionierung (16) ist ersichtlich, daß eine beispielsweise als Container (22) ausgebildete Last mit einem äußerst geringen Abstand zur Abdeckplatte (2) angeordnet werden kann. Gleichfalls wird ein sehr geringer Abstand zu einem angedeutet dargestellten Laderaumtor (23) realisiert.

## Patentansprüche

1. Vorrichtung zur Abdeckung eines unteren Bereiches einer von einem Tor verschließbaren Laderaumöffnung im Bereich einer Außenwandung eines Flugzeuges, dadurch gekennzeichnet, daß eine Abdeckplatte (2) mit mindestens einem die Abdeckplatte (2) mit einer Bodenstruktur (3) des Flugzeuges verbindenden Basisschwenklager (4) versehen ist, eine Stütze (10) im Bereich eines dem Basisschwenklager (4) abgewandten Endes der Abdeckplatte (2) über ein Stützenschwenklager (11) an die Abdeckplatte (2) angelenkt ist und eine Traverse (13) über ein Positionierschwenklager (14) mit der Stütze (10) und über ein Traversenschwenklager (15) mit der Bodenstruktur verbunden ist sowie das Traversenschwenklager (15) mit einem Abstand zum Basisschwenklager (4) angeordnet ist.

2. Vorrichtung nach Anspruch 1, dadurch gekennzeichnet, daß das Traversenschwenklager (15) zwischen dem Basisschwenklager (4) und einer Flugzeugaußenbegrenzung (19) angeordnet ist.

3. Vorrichtung nach Anspruch 1 oder 2, dadurch gekennzeichnet, daß die Stütze (10) im Bereich ihres der Abdeckplatte (2) abgewandten Endes mit einem einem Auflager (18) zuwendbaren Anschlußelement versehen ist.

4. Vorrichtung nach einem der Ansprüche 1 bis 3, dadurch gekennzeichnet, daß die Traverse (13) entlang ihrer Längserstreckung mit einer Richtungsänderung versehen ist.

5. Vorrichtung nach einem der Ansprüche 1 bis 4, dadurch gekennzeichnet, daß im Bereich einer dem Basisschwenklager (4) abgewandten Vorderkante (7) der Abdeckplatte (2) Leitrollen (8) zur Führung einer Last vorgesehen sind.

6. Vorrichtung nach einem der Ansprüche 1 bis 5, dadurch gekennzeichnet, daß das Basisschwenklager (4) aus Lagerstegen (5) ausgebildet ist, die auf einer mit der Bodenstruktur (3) verbundenen Lagerwelle (6) geführt sind.

7. Vorrichtung nach einem der Ansprüche 1 bis 6, dadurch gekennzeichnet, daß in Richtung einer Längsachse des Flugzeuges mindestens zwei Abdeckplatten (2) hintereinander angeordnet sind.

8. Vorrichtung nach einem der Ansprüche 4 bis 7 in Verbindung mit Anspruch 3, dadurch gekennzeichnet, daß das Anschlußelement versetzbar im Bereich des dem Auflager (18) zuwendbaren Endes der Stütze (10) angeordnet ist.

9. Vorrichtung nach einem der Ansprüche 7 oder 8 in Verbindung mit Anspruch 6, dadurch gekennzeichnet, daß die Lagerwelle (6) von einem Adapter (9) gehaltert ist, der über Halterungselemente (21) in eine Sitzschiene (20) im Bereich der Bodenstruktur (3) eingreift.

## Claims

1. Device for covering a bottom region of a loading area opening disposed in the region of an outer wall of an aircraft and closable by means of a door, characterized in that a cover plate (2) having at least one base swivel bearing (4) connecting the cover plate (2) to a floor structure (3) of the aircraft is provided, a bearer (10) is coupled in the region of an end of the cover plate (2) remote from the base swivel bearing (4) by a bearer swivel bearing (11) to the cover plate (2) and a cross-member (13) is connected by a positioning swivel bearing (14) to the bearer (10) and by a cross-member swivel bearing (15) to the floor structure and the cross-member swivel bearing (15) is disposed at a distance from the base swivel bearing (4).

2. Device according to claim 1, characterized in that the cross-member swivel bearing (15) is disposed between the base swivel bearing (4) and an aircraft outer delimitation (19).

3. Device according to claim 1 or 2, characterized in that the bearer (10) in the region of its end remote from the cover plate (2) is provided with a connection element which may be turned towards a support (18).

4. Device according to one of claims 1 to 3, characterized in that the cross-member (13) is provided along its longitudinal extension with a change in direction.

5. Device according to one of claims 1 to 4, characterized in that guide rollers (8) for guiding a load are provided in the region of a front edge (7) of the cover plate (2) remote from the base swivel bearing (4).

6. Device according to one of claims 1 to 5, characterized in that the base swivel bearing (4) takes the form of bearing webs (5) which are guided on a bearing shaft (6) connected to the floor structure (3).

7. Device according to one of claims 1 to 6, characterized in that at least two cover plates (2) are disposed successively in the direction of a longitudinal axis of the aircraft.

8. Device according to one of claims 4 to 7 in combination with claim 3, characterized in that the connection element is disposed displaceably in the region of the end of the bearer (10) which may be turned towards the support (18).

9. Device according to one of claims 7 or 8 in combination with claim 6, characterized in that the bearing shaft (6) is held by an extension piece (9) which by means of fixing elements (21) engages into a seat rail (20) in the region of the floor structure (3).

## Revendications

1. Dispositif destiné au recouvrement d'une zone inférieure d'une ouverture de soute à bagages pouvant être fermée par une porte et située dans la zone d'une paroi extérieure d'un avion, caractérisé en ce que une plaque de recouvrement (2) est pourvue au moins d'une charnière de base (4) reliant la plaque de recouvrement (2) avec une structure de base (3) de l'avion, en ce que un support (10) est articulé sur la plaque de recouvrement (2) dans la zone d'extrémité de la plaque de recouvrement (2) détournée de la charnière de base (4), via une articulation de soutien (11) et en ce que une traverse (13) est reliée avec le support (10) via une articulation de positionnement (14) et avec la structure de base via une articulation de traverse (15), l'articulation de traverse (15) étant disposée à une certaine distance par rapport à la charnière de base (4).

2. Dispositif selon la revendication 1, caractérisé en ce que l'articulation de traverse (15) est disposée entre la charnière de base (4) et une limite extérieure de l'avion (19).

3. Dispositif selon l'une ou l'autre des revendications 1 et 2, caractérisé en ce que le support (10) est pourvu dans la zone de son extrémité détournée de la plaque de recouvrement (2) d'un élément de connexion tourné vers un appui (18).

4. Dispositif selon l'une ou l'autre des revendications 1 à 3, caractérisé en ce que la traverse (13) est pourvue sur sa longueur d'un changement de direction.

5. Dispositif selon l'une ou l'autre des revendications 1 à 4, caractérisé en ce que dans la zone d'un bord avant (7) de la plaque de recouvrement (2) détourné de la charnière de base (4), sont prévus des rouleaux de guidage (8) destinés au guidage d'une charge.

6. Dispositif selon l'une ou l'autre des revendications 1 à 5, caractérisé en ce que la charnière de base (4) est formée de nervures d'appui (5) montées sur un arbre d'appui (6) relié avec la structure de base (3).

7. Dispositif selon l'une ou l'autre des revendications 1 à 6, caractérisé en ce que dans la direction d'un axe longitudinal de l'avion sont disposées au moins deux plaques de recouvrement (2) l'une derrière l'autre.

8. Dispositif selon l'une ou l'autre des revendications 4 à 7 relatives à la revendication 3, caractérisé en ce que l'élément de connexion est disposé de manière à pouvoir être déplacé sur l'extrémité du support (10) tournée vers l'appui (18).

9. Dispositif selon l'une ou l'autre des revendications 7 et 8 relatives à la revendication 6, caractérisé en ce que l'arbre d'appui (6) est maintenu par un adaptateur (9), qui s'engrène dans un rail d'appui (20) dans la zone de la structure de fond (3) via des éléments de fixation (21).
